# EUROPÄISCHE PATENTSCHRIFT

(11) **EP 1 332 052 B1**
(45) Veröffentlichungstag und Bekanntmachung des Hinweises auf die Patenterteilung: **28.12.2005**
(21) Anmeldenummer: 01988656.3
(22) Anmeldetag: 24.10.2001
(51) Int. Cl.: B42D 15/10, B41M 3/14, B41M 5/26

(54) **VERFAHREN ZUR ERZEUGENG EINES SICHERHEITSMERKMALS SOWIE DIESBEZÜGLICH AUSGESTATTETES PRINTMEDIUM**
METHOD FOR PRODUCING A SECURITY FEATURE AND PRINTED MEDIUM WHICH IS PROVIDED WITH SAID SECURITY FEATURE
PROCEDE DE PRODUCTION D'UNE CARACTERISTIQUE DE SECURITE ET IMPRIME PRESENTE EN CONSEQUENCE

(30) Priorität: 24.10.2000 DE 10052694
(43) Veröffentlichungstag der Anmeldung: 06.08.2003
(73) Patentinhaber: DATACARD CORPORATION, Minnetonka, MN 55343-9015 (US)
(72) Erfinder: KREUTER, Rüdiger, 64297 Darmstadt (DE)
(74) Vertreter: Alber, Norbert
(86) Internationale Anmeldenummer: PCT/EP2001/012308
(87) Internationale Veröffentlichungsnummer: WO 2002/034547

(56) Entgegenhaltungen:
- WO-A-01/28778
- GB-A- 2 242 161
- US-A- 4 847 184
- US-A- 6 060 223
- PATENT ABSTRACTS OF JAPAN vol. 1996, no. 11, 29. November 1996 (1996-11-29) & JP 08 187939 A (TOPPAN PRINTING CO LTD), 23. Juli 1996 (1996-07-23)

## Beschreibung

### I. Anwendungsgebiet

Die Erfindung betrifft ein Verfahren zur Erzeugung eines Sicherheitsmerkmals.

### ll. Technischer Hintergrund

Um die Fälschungssicherheit von Ausweisen oder Plastikkarten, die der Identifikation bzw. dem Zahlungsverkehr dienen, zu verbessern, werden die unterschiedlichsten Sicherheitsmerkmale an oder auf derartigen Printmedien aufgebracht.

Eine Möglichkeit besteht beispielsweise darin, daß die Kunststoffkarte einen mehrschichtigen Kartenkörper aufweist, dessen Mittelschicht undurchsichtig ist, und der Bedruckung mit den spezifischen Angaben dient, und wobei mindestens diese bedruckte Vorderseite, meist auch die Rückseite, mit einer durchsichtigen Deckschicht abgedeckt ist.

Auf der Oberseite der undurchsichtigen Mittelschicht ist dabei ein Bild oder ein Symbol oder Ähnliches aufgedruckt, und in den darüber befindlichen Bereichen der durchsichtigen Deckschicht ist eine dreidimensionale Oberflächenstruktur solcher Gestalt aufgeprägt, daß - durch die Ablenkung und Linsenwirkung der Einzelelemente dieser Strukturierung - bei Betrachtung aus zwei unterschiedlichen, meist um 90° verschiedenen, auch unterschiedliche Bilder bzw. Symbole bzw. Farbgestaltungen etc. sichtbar werden.

Da derartige Sicherheitsmerkmale zum einen unter technischen Aspekten nur mit aufwendigen Apparaturen nachgeahmt werden können, und zum anderen darüber hinaus die Art der eingearbeiteten Bilder bzw. Symbole auch je nach Seriennummer, Ausgabejahr etc. verändert werden können, bietet dies eine relativ hohe Sicherheit gegen vor allem kurzfristige Nachahmung.

Dennoch besteht der Nachteil dieses Sicherheitsmerkmals darin, daß zumindest Teile der Anordnung in der Oberfläche des Kartenkörpers vorhanden sind, mithin also verschmutzt, beschädigt oder auf andere Art und Weise funktionsunfähig gemacht werden können.

Aus der US-A-6 060 223 ist in diesem Zusammenhang ein Verfahren zur Erzeugung eines Sicherheitsmerkmals z.B. an Lotteriekarten bekannt, wobei das Plastiksubstrat wenigstens einen Umschlagstoff enthält, der durch selektive Bestrahlung mit Licht eine irreversible Farbänderung von einer Ausgangsfarbe zu einer Endfarbe vollzieht, wodurch ein mit dem Auge erkennbares Bild erzeugt werden kann.

In Patent Abstracts of Japan vol. 1996, no. 11, 29. November 1996 (1996-11-29) & JP 08 187939 A wird weiterhin ein derartiges Verfahren zum Erzeugen eines Sicherheitsmerkmals an einem Ausweis beschrieben.

### III. Darstellung der Erfindung

### a) Technische Aufgabe

Es ist daher die Aufgabe gemäß der Erfindung, ausgehend von diesem Stand der Technik ein Verfahren zu einem verbesserten Sicherheitsmerkmal zu schaffen.

### b) Lösung der Aufgabe

Diese Aufgabe ist durch die kennzeichnenden Merkmale des Anspruches 1 gelöst. Vorteilhafte Ausführungsformen ergeben sich aus den Unteransprüchen.

Dabei wird von dem an sich bekannten Grundgedanke ausgegangen, in einem Trägersubstrat, beispielsweise dem Kunststoffkörper der Karte oder einer Schicht dieses Kartenkörpers, sei es ein Plastikmaterial, ein Papiermaterial oder ein Mischmaterial, wenigstens einen Stoff anzuordnen, der bei Bestrahlung mit Licht einer bestimmten Wellenlänge, beispielsweise einem Laserstrahl, in seiner Farbwirkung eine dauerhafte Veränderung vollzieht, die irreversibel ist.

Ein solcher Umschlagstoff kann als Pulver, Granulat oder als Mikrokapseln im Substrat fein verteilt angeordnet werden.

Dadurch ist es möglich, durch Bestrahlen mit Licht bzw. einem Laserstrahl dieser bestimmten Wellenlänge, auf welchen der Umschlagstoff reagiert, einen für den Betrachter sichtbaren Farbumschlag in dem Kartenkörper zu bewirken. Wenn sich dieser Stoff auch unmittelbar unter der für den Betrachter sichtbaren Oberfläche im Substrat befindet, und er dort in einer ausreichend großen Konzentration vorhanden ist, ist für den Betrachter nicht der Umschlag einzelner Farbpartikel sichtbar, sondern die Farbwirkung des Substrates selbst in der mit Licht der fraglichen Wellenlänge beaufschlagten Bereich ändert sich für den Betrachter. Damit können innerhalb einer im Ausgangszustand einfarbigen Substratschicht durch Bestrahlung mit Licht, insbesondere mit einem fokussierten Strahl oder durch Abdecken bei der Beleuchtung mit einer entsprechend geformten Blende Bilder einer anderen Farbe erzeugt werden.

Eine solche farbige Bildwirkung auf einem Printmedium kann zwar theoretisch auch durch Bedrucken an der Oberfläche des Mediums erzielt werden, aber die optische Wirkung ist dennoch eine andere, da beim genauen Betrachten erkennbar wird, daß im Fall der Herstellung gemäß vorliegender Erfindung die Farbwirkung im Inneren des Substrates und nicht auf dessen Oberfläche auftritt.

Selbst dies kann vermieden werden, wenn die Farbänderung, die der Umschlagstoff vollzieht und die damit auch im gesamten Substrat bewirkt wird, eine Farbänderung von undurchsichtig zu durchsichtig ist. Damit kann erreicht werden, daß ein im Ausgangszustand zunächst durchgefärbter Kartenkörper nach Bestrahlung durch die fragliche Wellenlänge vollständig durchsichtig wird, wenn die Verteilung und Konzentration des Umschlagstoffes im Substrat ausreichend gleichmäßig und groß ist.

Damit lassen sich für den Betrachter Überprüfungen dahingehend vornehmen, daß ein vorbekanntes Bild oder Symbol durchsichtig im Kartenkörper vorhanden sein muß, was durch Betrachten vor einer Lichtquelle am leichtesten festgestellt werden kann.

Trotz dieser Wirkung kann bei Bedarf die vom Betrachter abgewandte Rückseite dieser Substratschicht mit einer z. B. undurchsichtigen Schicht abgedeckt werden, die vorzugsweise eine andere Farbe aufweist als die Substratschicht in dem Ausgangszustand, wodurch im bestrahlten Bereich eine Kontrastfärbung auftritt, die jedoch erst an der Rückseite des Kartenkörpers, also in dessen Tiefe, sichtbar wird.

Ebenso kann ein solcher Substratkörper auf Vorder- und/oder Rückseite mit einer durchsichtigen, nicht veränderbaren Deckschicht abgedeckt werden.

Der Vorteil all dieser Gestaltungen liegt darin, daß einerseits die Oberfläche immer glatt ist, also nicht mechanisch geprägt oder andersartig mechanische beeinflußt werden muß, was somit Verschmutzungen kaum ermöglicht. Ein weiterer Vorteil liegt darin, daß auf diese Art und Weise durchsichtige oder andersfarbige Bereiche, also Bilder und Symbole, in unterschiedlicher Form und an unterschiedlichen Positionen der Ausgangskarte aufgebracht werden können. Weiterhin können derart erzeugte Bildwirkungen, insbesondere in Form durchsichtiger Bereiche, auch nachträglich durch Bestrahlung mit Licht der fraglichen Wellenlänge jederzeit erweitert werden. So ist es denkbar, daß Pässe bei der Kontrolle entsprechend durch weitere Sicherheitsmerkmale oder Ergänzung des vorhandenen Sicherheitsmerkmals um weitere Bildanteile etc. ergänzt werden.

Erfindungsgemäß weist nun das Printmedium übereinander mehrere Substratschichten auf, wobei in jeder Schicht ein anderer Umschlagstoff, der also auf eine andere Wellenlänge reagiert, vorhanden ist.

Das heißt, das Printmedium besteht aus mindestens zwei miteinander verbundenen Substrat-Schichten, die unterschiedliche Umschlagstoffe mit unterschiedlichen, undurchsichtigen Ausgangsfarben aufweisen, die durch gleichzeitige oder nacheinander erfolgende Bestrahlung mit Licht unterschiedlicher Wellenlängen eine dauerhafte Farbänderung von den jeweiligen undurchsichtigen Ausgangsfarben nach durchsichtig vollziehen. Das Printmedium wird hierbei mittels gesteuertem Laserstrahl der jeweiligen Wellenlängen so bestrahlt wird, daß sich flächenmäßig in der Aufsicht betrachtet in den beiden Substratschichten höchstens teilweise überlappende Bilder durch den Umschlag von den Ausgangsfarben auf durchsichtig ergeben, so daß die nicht überlappenden Bereiche bei Betrachtung von der Vorder- und Rückseite ein jeweils andersfarbiges Bild zeigen.

Folglich ist der Überlappungsbereich der beiden Strahlungsbereiche der Kartenkörper vollständig durchsichtig, während der nicht überlappende Bereich bei Betrachtung von Vorder- und Rückseite ein jeweils andersfarbiges und - je nach räumlicher Gestaltung des Bestrahlungsbereiches- auch konturmäßig anderes Bild ergibt.

Vorzugsweise wird ein Substrat aus Kunststoff, insbesondere aus ABS, PVC, PTE verwendet.

In einer bevorzugten Ausführungsform werden Substrate verwendet, bei denen der Umschlagstoff in Form von Mikrokapseln oder Granulat oder Pulver im Substrat verteilt, insbesondere gleichmäßig verteilt, ist.

### c) Ausführungsbeispiele

Sicherheitsmerkmale aus dem Stand der Technik sowie eine Ausführungsform gemäß der Erfindung sind im folgenden anhand der Figuren beispielhaft näher beschrieben. Es zeigen:
- Fig. 1:: eine teilweise Querschnittsdarstellung durch einen Kartenkörper nach dem Stand der Technik,
- Fig. 2:: eine Querschnittsdarstellung durch einen anderen Kartenkörper nach dem Stand der Technik, und
- Fig. 3:: eine Querschnittsdarstellung durch einen Kartenkörper, der erfindungsgemäß mehrere aktive Schichten aufweist.

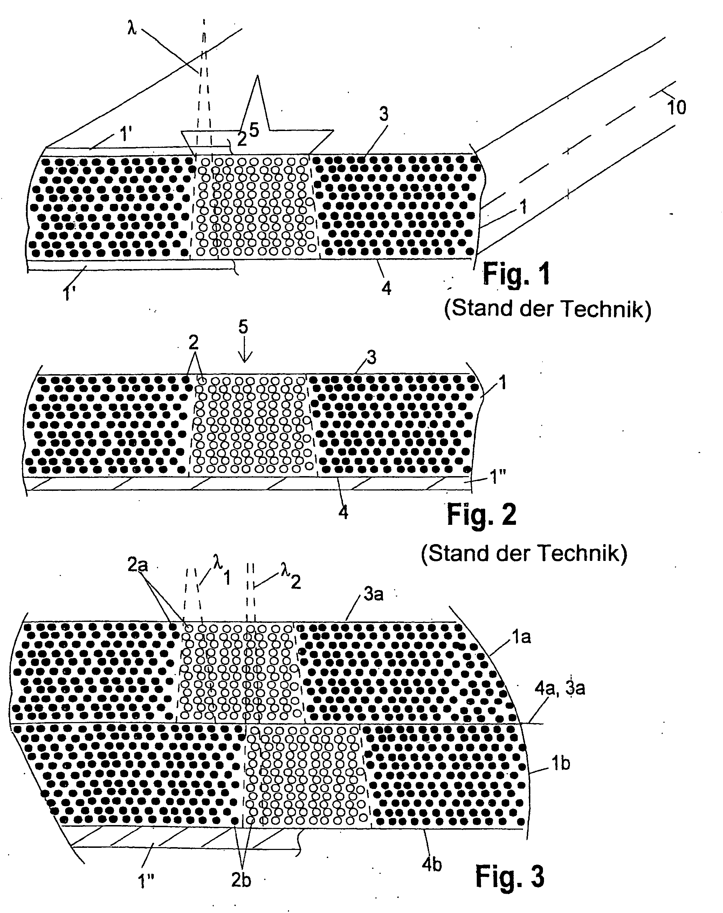

In der im Wesentlichen den Stand der Technik wiedergebenden Fig. 1 ist - in der rechten Bildhälfte - ein einschichtiger Kartenkörper in perspektivischer Ansicht sowie im Schnitt quer zur Kartenebene 10 durch den Umschlagbereich 5 hindurch dargestellt.

Der Kartenkörper besteht aus einem Monoblock aus Substrat 1, wie er beispielsweise durch Stranggießen oder Formgießen hergestellt sein kann, und in diesem Substrat 1 sind gleichmäßig Granulat-Körper 2 verteilt, die den Umschlagstoff enthalten bzw. aus dem Umschlagstoff bestehen, welcher bei Bestrahlen mit einem Lichtstrahl einer bestimmten Wellenlänge λ einen irreversiblen Farbumschlag erzeugen.

Die Granulatkörper 2 sind dabei in so dichter Verteilung angeordnet, daß die im Umschlagbereich 5, welcher mit Licht dieser Wellenlänge λ bestrahlt wurde, der Farbumschlag als Farbumschlag des gesamten Substrates 1 vom Betrachter wahrgenommen wird, und zwar nicht nur an der Oberfläche dieses Substrates 1, sondern auch in der Tiefe.

Dies ist insbesondere von Bedeutung, wenn - wie in Fig. 1 unterstellt - der Farbumschlag von undurchsichtig nach durchsichtig erfolgt, so daß nach Bestrahlen mit dem Licht der Wellenlänge λ der Umschlagbereich 5 für den Betrachter vollständig durchsichtig wird, während die Bereiche des Substrates 1 außerhalb des Umschlagbereiches undurchsichtig in einer Farbe entsprechend der Ausgangsfarbe des Granulates 2 bleiben.

Der Umschlagbereich 5 kann eine Bilddarstellung, eine Symboldarstellung oder ein Buchstaben/Zahlencode sein.

Wie in der linken Bildhälfte der Fig. 1 dargestellt, kann die Vorderseite 3 und/oder die Rückseite 4 dieses Substrates 1 mit einer durchsichtigen Deckschicht 1' abgedeckt sein, die keinerlei auf das Licht der Wellenlänge λ reaktiven Stoff enthält und von diesem vollständig durchdrungen werden kann, so daß diese Deckschichten auch vor der Bestrahlung aufgebracht sein können.

Damit kann die komplett fertiggestellte Karte einer nachträglichen Behandlung mittels Bestrahlen durch Licht, insbesondere Laserlicht, der bestimmten Wellenlänge λ, die den Umschlag im Umschlagstoff bewirkt, bestrahlt werden.

Fig. 2 zeigt demgegenüber insofern einen anderen, ebenfalls im Wesentlichen aus dem Stand der Technik bekannten Aufbau des Kartenkörpers, als auf der Rückseite 4 des mit dem Granulat 2 aus Umschlagstoff dotierten Substrat 1 eine undurchsichtige Deckschicht 1" angeordnet ist. Vorzugsweise weist diese Deckschicht 1" eine andere Farbe auf als die Ausgangsfarbe des Substrates 1. Im Umschlagbereich 5 ergibt sich damit eine andere Farbe als im übrigen Bereich nach der Bestrahlung mit Licht der Wellenlänge λ, mithin also ein für den Betrachter zweifarbiges Bild auf der Karte, bei dem ersichtlich ist, daß die Farbwirkung im Umschlagbereich 5 in der Tiefe des Kartenkörpers auftritt, nämlich an der Kontaktfläche zwischen der Substratschicht 1 und der Deckschicht 1".

Fig. 3 zeigt den Aufbau eines erfindungsgemäßen Kartenkörpers mit zwei Substratschichten 1 a, 1b, die jeweils Granulate 2a, 2b aufweisen, welche einen unterschiedlichen Umschlagstoff enthalten, welcher somit auch auf unterschiedliche Wellenlängen λ1 bzw. λ2 durch irreversiblen Farbumschlag, insbesondere von undurchsichtig auf durchsichtig, reagiert.

Dieser zweischichtige Kartenkörper kann - wie im rechten Bildteil dargestellt - ohne Deckschichten ausgestattet sein.

Durch Bestrahlung bzw. Beschriftung mit dem fokussierten Laserlicht der Wellenlängen λ1 bzw. λ2 können - gleichzeitig oder auch nacheinander - in den Substratschichten 1a und 1b unterschiedlich geformte Umschlagbereiche, also Bilder, erzeugt werden.

Vor allem wenn - wie in Fig. 3 dargestellt - diese Umschlagbereiche in den Schichten 1a und 1b teilweise überlappen, ergibt dies für den Betrachter eine insofern auffällige Bildwirkung, wenn der Farbumschlag in diesen Bereichen immer von der Ausgangsfarbe auf durchsichtig erfolgt, als durch diese zwei unterschiedlichen Bestrahlungsbereiche insgesamt drei Bilder erzeugt werden können:

Im Überlappungsbereich der beiden Umschlagbereiche ist der Kartenkörper vollständig durchsichtig, stellt also ein erstes durchsichtiges Bild dar.

In dem Bereich, in dem der durchsichtige Umschlagbereich der Schicht 1a von dem Substrat der Schicht 1b mit der Ausgangsfarbe hinterlegt ist (in Fig. 3 links vom Überlappungsbereich), erkennt der Betrachter ein Bild, welches die Farbe der Ausgangsfarbe der Substratschicht 1b aufweist, wenn er die Karte von der Vorderseite 3a der oberen Schicht 1 a aus betrachtet.

Dreht der Benutzer die Karte dagegen um, kann er von der Rückseite 4b der anderen Schicht 1 b aus ein drittes Bild erkennen, welches - in Fig. 3 rechts vom Überlappungsbereich - ihm in der Ausgangsfarbe der Schicht 1a erscheint, während die Umgebung die Ausgangsfarbe der Schicht 1 b aufweist.

Das gleiche ist selbstverständlich auch mit mehr als zwei, den Umschlagstoff enthaltenden, Substratschichten 1 a, 1b, ... möglich.

In der linken Bildhälfte ist ferner dargestellt, daß zusätzlich die Rückseite 4b mit einer undurchsichtigen Deckschicht 1" ausgestattet sein kann. Damit reduziert sich die oben beschriebene dreifache Bildwirkung jedoch auf die nur zwei, von der Vorderseite 3a her erkennbaren, Bildwirkungen, von denen der Überlappungsbereich somit in der Farbe der undurchsichtigen Deckschicht 1" erscheint.

### BEZUGSZEICHENLISTE

- 1: Substrat
- 1': undurchsichtige Deckschicht
- 1": durchsichtige Deckschicht
- 2: Granulat
- 3: Vorderseite
- 4: Rückseite
- 5: Umschlagbereich
- λ: Wellenlänge

## Patentansprüche

1. Verfahren zur Erzeugung eines Sicherheitsmerkmals an Printmedien, insbesondere an Ausweisen, Plastik-Zahlungskarten, -Kreditkarten, -Speicherkarten,
wobei das Printmedium aus mindestens zwei miteinander verbundenen Substrat-Schichten (1a, 1b) besteht, die unterschiedliche Umschlagstoffe mit unterschiedlichen, undurchsichtigen Ausgangsfarben aufweisen, die durch gleichzeitige oder nacheinander erfolgende Bestrahlung mit Licht unterschiedlicher Wellenlängen (λ1, λ2) eine dauerhafte Farbänderung von den jeweiligen undurchsichtigen Ausgangsfarben nach durchsichtig vollziehen,
wobei das Printmedium mittels gesteuertem Laserstrahl der jeweiligen Wellenlängen (λ1, λ2) so bestrahlt wird, daß sich flächenmäßig in der Aufsicht betrachtet in den beiden Substratschichten höchstens teilweise überlappende Bilder durch den Umschlag von den Ausgangsfarben auf durchsichtig ergeben, so daß die nicht überlappenden Bereiche bei Betrachtung von der Vorder- und Rückseite ein jeweils andersfarbiges Bild zeigen.

2. Verfahren nach Anspruch 1,
**dadurch gekennzeichnet, daß**
ein Substrat aus Kunststoff, insbesondere aus ABS, PVC, PTE verwendet wird.

3. Verfahren nach Anspruch 1 oder 2,
**dadurch gekennzeichnet, daß**
Substrate verwendet werden, bei denen der Umschlagstoff in Form von Mikrokapseln oder Granulat oder Pulver im Substrat verteilt, insbesondere gleichmäßig verteilt, ist.

## Claims

1. A process for producing a security feature on print media, in particular passes, plastic payment cards, plastic credit cards, plastic memory cards, wherein the print media comprises at least two joined substrate layers (1a, 1b) having different colour-changing substances with different opaque starting colours which by virtue of simultaneous or successive irradiation with light of different wavelengths (λ1, λ2) undergo a permanent colour change from the respective opaque starting colour to transparent,
wherein the print media is irradiated by a controlled laser beam of the respective wavelengths (λ1, λ2) such that the colour changes from the starting colours to transparent produce images in both substrate layers which overlap at most partially in terms of surface when seen in top view so that the non overlapping areas show images of different colours when seen from the front and from the back side respectively.

2. A process according to claim 1
**characterised by**
the substrate being a plastic material, in particular ABS, PVC, PTE.

3. A process according to claim 1 or 2
**characterised by**
the use of substrates in which the colour-changing substance is distributed, in particular uniformly distributed, in the substrate in form of microcapsules or granules or powder.

## Revendications

1. Procédé pour produire un dispositif de sécurité sur des médias imprimés, en particulier des pièces d'identité, des cartes de paiement en plastique, des cartes de crédit en plastique, des cartes de mémoire en plastique, où le média imprimé comporte au moins deux couches de substrat (1a, 1b) reliées entre elles ayant différentes substances pouvant changer de couleur et différentes couleurs initiales opaques, qui par de l'irradiation simultanée ou successive par la lumière de différentes longueurs d'onde (λ1, λ2) subissent un changement permanent de couleur de la couleur initiale opaque respective à transparent, où le média d'impression est irradié par un rayon laser de longueurs d'onde respectives (λ1, λ2) commandé tel que vue en surface en plan dans les deux couches de substrat des images, qui se recouvrent au maximum partiellement, sont créés par le changement de couleur des couleurs initiales opaques à transparent, de sorte que les secteurs qui ne se recouvrent pas montrent des images de couleurs différentes vus de l'avant respectivement de l'arrière.

2. Procédé selon la revendication 1,
**caractérisé par**
l'utilisation d'un substrat en matière plastique, en particulier acrylonitrile butadiène styrène (ABS), polychlorure de vinyle (PVC), polyéthylène téréphtalate (PET).

3. Procédé selon la revendication 1 ou 2
**caractérisé par**
l'utilisation de substrats au près desquels la substance pouvant changer de couleur est distribuée, en particulier uniformément, dans les substrats sous forme de micro capsules ou granules ou poudre.
